# EUROPEAN PATENT APPLICATION

(11) **EP 4 524 458 A1**
(43) Date of publication of application: **19.03.2025**
(21) Application number: 23851511.8
(22) Date of filing: 05.07.2023
(51) Int. Cl.: F17D 1/08, H02G 15/34, H01B 12/00

(54) **DIRECT-CURRENT SUPERCONDUCTING LIQUID HYDROGEN ENERGY PIPELINE SYSTEM WITH LIQUID NITROGEN COLD SHIELDS**

(30) Priority: 08.08.2022 CN 202210944639
(71) Applicant: Chengdu Jingzhiyi Technology Co., Ltd., Sichuan 610213 (CN)
(72) Inventor: LIAO, Yong, Chengdu, Sichuan 610211 (CN); QIN, Boyu, Chengdu, Sichuan 610211 (CN); CHEN, Shiyi, Chengdu, Sichuan 610211 (CN); WANG, Hongzhen, Chengdu, Sichuan 610211 (CN); ZHANG, Qianjun, Chengdu, Sichuan 610211 (CN); WANG, Yan, Chengdu, Sichuan 610211 (CN); HU, Yifan, Chengdu, Sichuan 610211 (CN); ZHANG, Lindong, Chengdu, Sichuan 610211 (CN)
(74) Representative: Mathys & Squire
(86) International application number: PCT/CN2023/105912
(87) International publication number: WO 2024/032286

(57) **Abstract**

Disclosed is a direct-current superconducting liquid hydrogen energy pipeline system with liquid nitrogen cold shields. The system comprises a superconducting energy pipeline system starting station A, a superconducting energy pipeline system intermediate station B and a superconducting energy pipeline system terminal station C, which are sequentially connected by means of a liquid hydrogen superconducting pipeline with a liquid nitrogen cold shield, wherein the liquid hydrogen superconducting pipeline with the liquid nitrogen cold shield comprises liquid hydrogen conveying pipelines (9, 30), liquid nitrogen cold shield layers (10, 16, 32, 35), external cold insulation layers (11, 33), and superconducting cable groups (8, 29), which are arranged inside the liquid hydrogen conveying pipeline; liquid nitrogen cold shields (10, 16, 32, 35) are arranged outside the liquid hydrogen conveying pipeline in a segmented manner, and the bottom and top of each segment of liquid nitrogen cold shield are respectively connected to a liquid nitrogen supply pipeline (12) and a nitrogen recovery pipeline (14) by means of pipelines. The pipeline system is applied to a large-scale new energy base for direct-current superconducting power transmission, rich power can be used for water electrolysis hydrogen production, and prepared hydrogen can be used for providing a low-temperature environment for realizing superconducting after being liquefied, such that the whole system can achieve the advantages of large-capacity, low-loss and high-efficiency transmission of energy, and cooperative hydrogen-power complementation.

## Description

### TECHNICAL FIELD

The disclosure relates to a direct-current superconducting liquid hydrogen energy pipeline system with liquid nitrogen cold shields.

### BACKGROUND

The Pacific Rim region is one of the most populous and economically developed regions in the world. According to the data of the International Monetary Fund (IMF) in 2021, the total GDP (calculated in US dollars) of China, the United States, Russia, Japan, Korea, and Canada accounts for approximately 23.44% of global GDP. At the same time, due to the growing demand for energy, the Pacific Rim region has become one of the largest energy consuming regions in the world. However, while meeting this demand, the traditional fossil fuel energy also brings environmental and climate problems.

Spanning 12 time zones from Beijing in China to Washington in United States, the two countries have rich resources in photovoltaic power generation. The southern region of China and the western region of the United States often enjoy sufficient sunshine, which provides favorable conditions for photovoltaic power generation. By building the Pacific Rim Energy Corridor between the two countries, the solar energy resources in southern region of China and the solar energy resources in the western region of United States can complement each other to achieve a cross-time-zone energy exchange, which is expected to provide effective support for regional energy transformation and sustainable development.

In response to global energy challenges and trends, we propose to establish an equal, resilient and sustainable energy cooperation system in the Pacific Rim region. The goal is to conform to the development trend of clean energy and provide a stable and safe energy supply to countries in the service area. We believe that liquid hydrogen superconducting energy pipelines have significant technical advantages and propose an optimized system based on this innovative technology: a direct-current superconducting liquid hydrogen energy pipeline system with liquid nitrogen cold shields.

### SUMMARY

**In** order to achieve development and efficient transmission of large-scale renewable energy, the disclosure proposes a direct-current superconducting liquid hydrogen energy pipeline system with liquid nitrogen cold shields, which uses a liquid nitrogen cold shield structure to maintain and reduce liquid hydrogen leakage cooling when liquid hydrogen and electrical power are efficiently delivered together. The segmented liquid nitrogen cold shield structure reduces the implementation difficulty for cold shielding. The direct-current superconducting liquid hydrogen energy pipeline system can collect electrical power and hydrogen energy from various renewable energy bases for long-distance transmission.

The technical solution adopted by the disclosure to solve its technical problems is as follows. A direct-current superconducting liquid hydrogen energy pipeline system with liquid nitrogen cold shields includes a superconducting energy pipeline system starting station A, a superconducting energy pipeline system intermediate station B and a superconducting energy pipeline system terminal station C, which are connected in sequence through a liquid hydrogen superconducting pipeline with the liquid nitrogen cold shields. The liquid hydrogen superconducting pipeline with the liquid nitrogen cold shields includes a liquid hydrogen delivery pipeline, liquid nitrogen cold shields, an external cold insulation layer, and a superconducting cable group arranged inside the liquid hydrogen delivery pipeline. The liquid nitrogen cold shields are arranged in segments outside the liquid hydrogen delivery pipeline, and the bottom and top of each of the liquid nitrogen cold shields are respectively connected to a liquid nitrogen supply pipeline and a nitrogen recovery pipeline through pipelines. The nitrogen recovery pipeline is connected to a nitrogen re-liquefaction device through a pipeline, and the nitrogen re-liquefaction device is connected to the liquid nitrogen supply pipeline through a pipeline.

Compared with the related art, the positive effects of the disclosure are as follows.

The disclosure focuses on optimizing the cold shields of the liquid hydrogen superconducting energy pipeline system. The disclosure provides to set up a separate liquid nitrogen pipeline to provide liquid nitrogen and the liquid nitrogen cold shields wraps in segments the liquid hydrogen pipeline, and provides to arrange a nitrogen recovery system to re-liquefy and supplement the liquid nitrogen. At the same time, in order to improve the laying and positioning effect of superconducting cables in the pipeline, the disclosure uses the support pulley block installed in the liquid hydrogen pipeline to assist in erecting superconducting cables in the center of the liquid hydrogen pipeline, to ensure that the superconducting cables are in the most favorable heat dissipation position. The disclosure can be applied to a large-scale renewable energy bases for direct-current superconducting power transmission. The abundant electrical power can be used for electrolysis of water to produce hydrogen, which can then be liquefied to provide a low temperature environment for realizing superconductivity, and then the whole system can achieve the advantages of large-capacity, low-loss and high-efficiency transmission of energy, and complementary synergy between hydrogen and electrical power.

Compared with the existing liquid hydrogen superconducting energy pipeline system technology, the disclosure solves the problem of excessive evaporation and heat leakage of core liquid hydrogen that poses a risk of superconductivity loss. The overhead design with low temperature cables and the support pulley block being installed in the pipeline proposed in the disclosure solves the heat dissipation requirements for superconducting cables, and also solves the problem of the irregular cable layout affecting the liquid hydrogen transmission flow channel and causing excessive fluid resistance. The disclosure optimizes the existing mixed transmission technology of liquid nitrogen cold shields and liquid hydrogen superconductivity, thereby reducing the difficulty of implementing superconducting energy pipeline projects. The disclosure provides a solution for promoting the large-scale development of renewable energy and the high-efficiency mixed transmission mode of hydrogen and power under the background of carbon neutrality in the future, which has broad application prospects.

### BRIEF DESCRIPTION OF THE DRAWINGS

The disclosure will be illustrated by way of example with reference to the accompanying drawings, in which:
FIG. 1 is a schematic diagram of the overall structure of the disclosure.
FIG. 2 is a structural cross-section schematic diagram of the liquid hydrogen superconducting pipeline system with the liquid nitrogen cold shields.
FIG. 3 is a schematic diagram of the multi-layer structure of the liquid hydrogen superconducting pipeline system with the liquid nitrogen cold shields.

The reference numbers in the accompanying drawings include: a first electrical power input rectifying station 1, a first normal temperature cable group 2, a first low temperature cable group 3, a first adapter 4, a first liquid hydrogen storage container 5, a water electrolysis device 6, a hydrogen liquefaction device 7, a first superconducting cable group 8, a first liquid hydrogen delivery pipeline 9, a first liquid nitrogen evaporation cold shield 10, a first external cold insulation layer 11, a liquid nitrogen supply pipeline 12, a first liquid nitrogen pressure-reducing valve 13, a nitrogen recovery pipeline 14, a nitrogen re-liquefaction device 15, a second liquid nitrogen evaporation cold shield 16, a second liquid nitrogen pressure-reducing valve 17, a second liquid hydrogen storage container 18, a second adapter 19, a second low temperature cable group 20, a second normal temperature cable group 21, a second electrical power input rectifying station 22, a third normal temperature cable group 23, a third low temperature cable group 24, a third adapter 25, a third liquid hydrogen storage container 26, a hydrogen re-liquefaction device 27, a liquid hydrogen pump 28, a second superconducting cable group 29, a second liquid hydrogen delivery pipeline 30, a third liquid nitrogen pressure-reducing valve 31, a third liquid nitrogen evaporation cold shield 32, a second external cold insulation layer 33, a fourth liquid nitrogen pressure-reducing valve 34, a fourth liquid nitrogen evaporation cold shield 35, a fourth liquid hydrogen storage container 36, a fourth adapter 37, a fourth low temperature cable group 38, a fourth normal temperature cable group 39, an output power inverter station 40, a liquid hydrogen pressurized loading facility 41, a hydrogen heating and pressuring device 42, a hydrogen power generation device 43, a cable support pulley block 44, an internal heat insulation layer 45.

### DETAILED DESCRIPTION

A direct-current superconducting liquid hydrogen energy pipeline system with liquid nitrogen cold shields includes: a superconducting energy pipeline system starting station A, a superconducting energy pipeline system intermediate station B, a superconducting energy pipeline system terminal station C, a liquid hydrogen superconducting pipeline system with the liquid nitrogen cold shields, a nitrogen re-liquefaction device and other subsystems.

The superconducting energy pipeline system starting station A may receive electrical power of renewable energy and electrolyze water by using abundant electrical power of renewable energy to produce hydrogen, and liquefy the hydrogen. The superconducting energy pipeline system starting station A may also be connected to the liquid hydrogen superconducting pipeline system with the liquid nitrogen cold shields through liquid hydrogen superconducting pipelines to deliver the electrical power and liquid hydrogen energy.

The superconducting energy pipeline system intermediate station B may be connected to the liquid hydrogen superconducting pipeline system with the liquid nitrogen cold shields through liquid hydrogen superconducting pipelines to deliver the electrical power and liquid hydrogen energy. The superconducting energy pipeline system intermediate station B may also receive new external electrical power, re-liquefy the evaporated hydrogen, and re-pressurize the unevaporated liquid hydrogen. The superconducting energy pipeline system intermediate station B of the disclosure represents only one functional schematic station, and in actual implementation, the superconducting energy pipeline system intermediate station B is composed of intermediate station B₁, intermediate station B₂, ..., intermediate station Bₙ with a same structure as the intermediate station B connected in series in sequence.

The superconducting energy pipeline system terminal station C may be connected to the liquid hydrogen superconducting pipeline system with the liquid nitrogen cold shields through liquid hydrogen superconducting pipelines to deliver the electrical power and liquid hydrogen energy. The superconducting energy pipeline system terminal station C may also convert the received direct-current into alternating-current, and deliver the electrical power to the external power grid. The superconducting energy pipeline system terminal station C may also pressurize the received liquid hydrogen for sale and utilize the evaporated gaseous hydrogen for power generation or external sales.

The liquid hydrogen superconducting pipeline with the liquid nitrogen cold shields mainly plays the role of connecting the superconducting energy pipeline system starting station A, the superconducting energy pipeline system intermediate station B and the superconducting energy pipeline system terminal station C. At the same time, the system has separately laid liquid nitrogen pipeline and nitrogen pipeline to provide liquid nitrogen for cold shielding and recover the evaporated nitrogen after cold shielding.

The liquid hydrogen superconducting pipeline with the liquid nitrogen cold shields includes a liquid hydrogen delivery pipeline, liquid nitrogen cold shields, an external cold insulation layer and a superconducting cable group arranged inside the liquid hydrogen delivery pipeline. The liquid nitrogen cold shields are arranged in segments outside the liquid hydrogen delivery pipeline, and the bottom and top of each of the liquid nitrogen cold shields are respectively connected to a liquid nitrogen delivery pipeline and a low temperature nitrogen recovery pipeline through pipelines.

The nitrogen re-liquefaction device mainly re-liquefies the evaporated nitrogen after cold shielding into liquid nitrogen and supplements the liquid nitrogen into the liquid nitrogen pipeline. The setting of the nitrogen re-liquefaction device is related to the cold energy consumption of the liquid nitrogen. The nitrogen re-liquefaction device may be set in any area that requires cold energy. The number of the nitrogen re-liquefaction device depends on the evaporation needs of the actual pipeline system.

Hereinafter, the internal configuration of each subsystem and the connection relationships between subsystems will be described in detail with reference to the accompanying drawings.

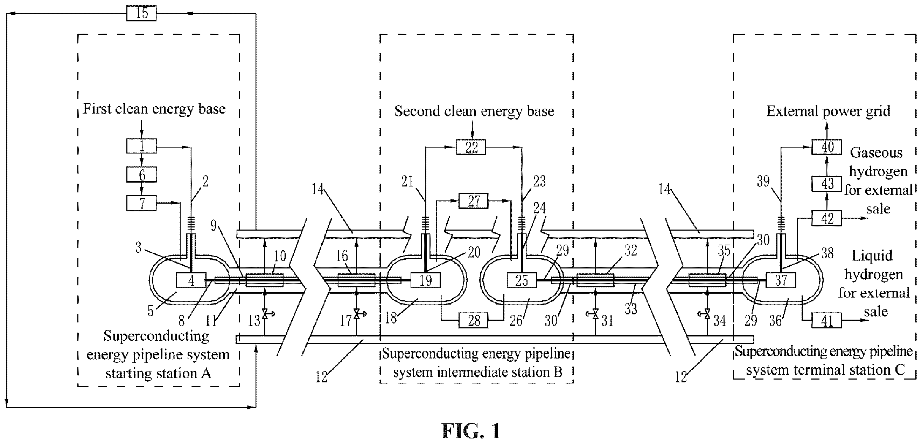

As shown in FIG. 1:
1) the superconducting energy pipeline system starting station A includes: a first electrical power input rectifying station 1, a first normal temperature cable group 2, a first low temperature cable group 3, a first adapter 4, a first liquid hydrogen storage container 5, a water electrolysis device 6, a hydrogen liquefaction device 7, a first superconducting cable group 8, and a first liquid hydrogen delivery pipeline 9, etc.

The upstream clean energy base is connected to the first electrical power input rectifying station 1 to receive external electrical power, the first electrical power input rectifying station 1 is connected to the first normal temperature cable group 2, the first normal temperature cable group 2 is connected to the first low temperature cable group 3, the first low temperature cable group 3 is connected to the first adapter 4, and the first adapter 4 is connected to the first superconducting cable group 8 to deliver the electrical power to the superconducting energy pipeline system intermediate station B through superconductivity.

The first electrical power input rectifying station 1 delivers abundant electrical power to the water electrolysis device 6 through cables. The electrical power is used to decompose water into hydrogen and oxygen in the water electrolysis device 6. The oxygen is sold or discharged externally. The hydrogen is delivered to the hydrogen liquefaction device 7 through pipelines to produce liquid hydrogen. The hydrogen liquefaction device 7 delivers the liquid hydrogen to the first liquid hydrogen storage container 5 through a dedicated pipeline for liquid hydrogen, and the first liquid hydrogen storage container 5 delivers the liquid hydrogen to downstream location through the first liquid hydrogen delivery pipeline 9.

The first electrical power input rectifying station 1 includes the combination of common power equipment such as high-voltage direct-current rectifiers, rectifier transformers, filters, disconnecting switches, chopper switches and chopper resistors, which are mainly configured depending on the requirements of power input or output.

The first normal temperature cable group 2 refers to power cables used in a direct-current power transmission and distribution system.

The first low temperature cable group 3 refers to low temperature resistant cables with insulating materials such as polypropylene laminated paper (PPLP), basalt fiber, or the like as a main insulating layer.

The first liquid hydrogen storage container 5 may be various types of heat insulation containers. The forms of heat insulation include but are not limited to vacuum powder heat insulation, vacuum-liquid nitrogen-vacuum three-layer heat insulation, vapor-phase self-cold-shielding composite heat insulation, etc.

The water electrolysis device 6 may be a device such as an alkaline electrolysis cell (ACE), a proton exchange membrane (PEM) electrolysis cell, and a solid oxide electrolysis cell (SOEC), and its supporting facilities.

The first superconducting cable group 8 is composed of multiple superconducting cables, and a single cable is composed of a cable skeleton, a superconductor, a shielding layer and a protective casing. The core conductive material may be BSCCO tape, YBCO tape, MgB superconducting material, etc. The skeleton material is copper, and the low temperature insulation material is generally PPLP.

2) The superconducting energy pipeline system intermediate station B includes a second liquid hydrogen storage container 18, a second adapter 19, a second low temperature cable group 20, a second normal temperature cable group 21, a second electrical power input rectifying station 22, a third normal temperature cable group 23, a third low temperature cable group 24, a third adapter 25, a third liquid hydrogen storage container 26, a hydrogen re-liquefaction device 27, a liquid hydrogen pump 28, a second superconducting cable group 29, and a second liquid hydrogen delivery pipeline 30, etc.

The second liquid hydrogen storage container 18 is connected to the upstream first superconducting cable group 8 through a superconducting cable, and connected to the upstream first liquid hydrogen delivery pipeline 9 through a pipeline. The first superconducting cable group 8 is connected to the second adapter 19, the second adapter 19 is connected to the second low temperature cable group 20, and the second low temperature cable group 20 is ultimately connected to the second normal temperature cable group 21 to deliver the electrical power to the second electrical power input rectifying station 22. The second electrical power input rectifying station 22 can not only receive external electrical power, but also deliver the electrical power to the outside. The second electrical power input rectifying station 22 is connected to the third normal temperature cable group 23, the third normal temperature cable group 23 is connected to the third low temperature cable group 24, the third low temperature cable group 24 is connected to the third adapter 25, and the third adapter 25 is connected to the second superconducting cable group 29 to deliver the electrical power to the superconducting energy pipeline system terminal station C through superconducting cable. The second liquid hydrogen storage container 18 performs gas-liquid separation on the received liquid hydrogen, the vapor-phase from the second liquid hydrogen storage container 18 is delivered through a pipeline to the hydrogen re-liquefaction device 27 for re-liquefaction, and the re-liquefied liquid hydrogen is delivered through a pipeline to the third liquid hydrogen storage container 26. The liquid-phase from the second liquid hydrogen storage container 18 is delivered through a pipeline to the liquid hydrogen pump 28 for pressurization, and the pressurized liquid hydrogen is delivered to the third liquid hydrogen storage container 26 through a pipeline to cooperate with the next round of superconducting delivery.

The liquid hydrogen pump 28 may be a centrifugal pump, a diaphragm pump, a bellows pump, a piston pump, or the like.

3) The superconducting energy pipeline system terminal station C includes a second superconducting cable group 29, a second liquid hydrogen delivery pipeline 30, a fourth liquid hydrogen storage container 36, a fourth adapter 37, a fourth low temperature cable group 38, a fourth normal temperature cable group 39, an output power inverter station 40, a liquid hydrogen pressurized loading facility 41, a hydrogen heating and pressuring device 42, and a hydrogen power generation device 43.

The fourth liquid hydrogen storage container 36 is connected to the upstream second superconducting cable group 29 through a superconducting cable, and connected to the upstream second liquid hydrogen delivery pipeline 30 through a pipeline. The second superconducting cable group 29 is connected to the fourth adapter 37, the fourth adapter 37 is connected to the fourth low temperature cable group 38, and the fourth low temperature cable group 38 is ultimately connected to the fourth normal temperature cable group 39 to deliver the electrical power to the output power inverter station 40. The output power inverter station 40 can not only receive superconducting electrical power and electrical power generated through hydrogen, but also deliver the electrical power to the outside. The received hydrogen is decompressed and separated through the fourth liquid hydrogen storage container 36. Vapor-phase from the fourth liquid hydrogen storage container 36 is delivered to the hydrogen heating and pressuring device 42 through a pipeline to increase the temperature to normal temperature and increase the pressure. Hydrogen at normal temperature is delivered to the hydrogen power generation device 43 through a pipeline to produce electrical power. The electrical power produced in the hydrogen power generation device 43 is delivered to the output power inverter station 40, and then the collected electrical power is delivered to the external power grid. Liquid-phase from the fourth liquid hydrogen storage container 36 is delivered to the liquid hydrogen pressurization loading facility 41 through a pipeline for pressurization, and the pressurized liquid hydrogen is delivered to users of the liquid hydrogen through a liquid hydrogen tanker.

The hydrogen heating and pressuring device 42 may be a combination of an air-heated aluminum finned re-heater, a hydrogen compressor, and auxiliary equipment.

The hydrogen power generation device 43 may be various types of fuel cells (such as proton exchange membrane fuel cells, alkaline fuel cells and solid oxide fuel cells, etc.), pure hydrogen/hydrogen-blended gas turbines, pure hydrogen/hydrogen-blended internal combustion engines, etc., the corresponding hydrogen power generation device is selected based on hydrogen transmission scale and local resources.

The liquid hydrogen pressurized loading facility 41 is composed of a liquid hydrogen pump, a quantitative loading system, a liquid hydrogen loading hose, a weighbridge, an auxiliary production facility, and the like.

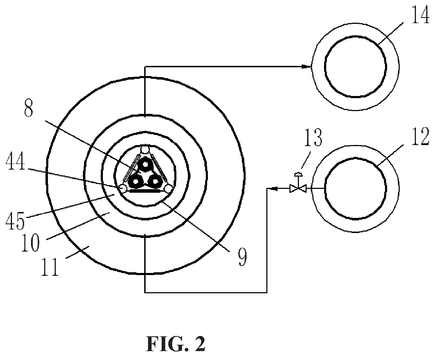

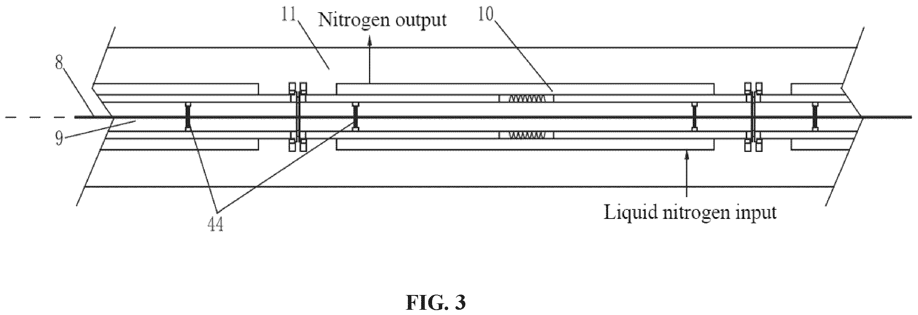

4) The structure of the liquid hydrogen superconducting pipeline with the liquid nitrogen cold shields is shown in FIG. 2 and FIG. 3. A first superconducting cable group 8, a cable support pulley block 44, a first liquid hydrogen delivery pipeline 9, an internal heat insulation layer 45, a first liquid nitrogen evaporation cold shield 10, a first external cold insulation layer 11, a liquid nitrogen supply pipeline 12, a first liquid nitrogen pressure-reducing valve 13, a nitrogen recovery pipeline 14, and the like are included.

A cross-sectional schematic diagram of a liquid hydrogen superconducting pipe provided with liquid nitrogen cold shields is shown in Fig. 2. A first superconducting cable group 8, a cable support pulley block 44, a first liquid hydrogen delivery pipeline 9, an internal heat insulation layer 45, a first liquid nitrogen evaporation cold shield 10, and a first external cold insulation layer 11, which are arranged coaxially from inside to outside, are included. Moreover, a liquid nitrogen supply pipeline 12, a first liquid nitrogen pressure-reducing valve 13, a nitrogen recovery pipeline 14, and the like, which are constructed collaboratively, are included.

[**0043]** The first superconducting cable group 8 is used for superconducting power transmission. The first superconducting cable group 8 is composed of a copper skeleton, a superconducting material, an electrical insulation layer, a protective casing and a cable assembly rack, etc., and is used for power transmission.

[**0044]** The first layer, i.e., the first liquid hydrogen delivery pipeline 9, is used for liquid hydrogen transmission, and for cooling the first superconducting cable group 8 at the same time. A cable support pulley block 44 is arranged inside the first liquid hydrogen delivery pipeline 9 to support the superconducting cable, to assist in erecting the superconducting cables in the center of the liquid hydrogen pipeline, and to ensure that the superconducting cables are in the most favorable heat dissipation position, thereby avoiding the problem that the irregular laying of the superconducting cable leads to excessive resistance in the liquid hydrogen transmission flow channel.

[**0045]** The second layer, i.e., the internal heat insulation layer 45, is used for isolating liquid hydrogen and liquid nitrogen, and may be a high-density heat insulation material or a vacuum heat insulation structure.

[**0046]** The third layer, i.e., the first liquid nitrogen evaporation cold shield 10, is mainly used to load liquid nitrogen, provide cold shielding for heat leakage for the liquid hydrogen in the first layer, and reduce the evaporation rate of the liquid hydrogen.

[**0047]** The fourth layer, i.e., the first external cold insulation layer 11, is used to isolate the heat exchange between the liquid nitrogen and the external environment, and is generally made of a low-density heat insulation material. The external cold insulation layer also includes conventional attached structures such as a moisture barrier and a protective layer.

[**0048]** The internal heat insulation layer 45 may adopt high-vacuum multi-layer winding heat insulation: using materials such as aluminum foil of 0.006 mm as reflective shield, cellophane of 0.1 mm as the spacer, and simultaneously, the interlayer is filled with 5A molecular sieves or activated carbon adsorbents to absorb any leaked hydrogen, in order to maintain the vacuum in the interlayer for a long term.

[**0049]** The first liquid nitrogen evaporation cold shield 10 is a cold shield area located outside the liquid hydrogen pipeline for isolating liquid hydrogen. Considering the cold insulation effect, the zero-pressure evaporation cold shield technology can be used to maintain a temperature of 77K to ensure the lowest cold leakage effect of the liquid hydrogen inside. The specific structure of the first liquid nitrogen evaporation cold shield 10 may be a concave jacketed tubing prefabricated in advance, or a cold shield tubing directly welded onto the outside of the liquid hydrogen pipeline.

[**0050]** The first external cold insulation layer 11 is a conventional low temperature cold insulation material, and the outer surface of the heat insulation material is in contact with the atmosphere. Common cold insulation methods for liquid nitrogen engineering and LNG engineering pipeline can be used. The heat insulation structure includes materials such as polyurethane, polyisocyanurate, and low-temperature elastomeric insulation, along with details like a moisture barrier and a protective layer.

[**0051]** 5) The nitrogen re-liquefaction device mainly includes the nitrogen re-liquefaction device 15.

[**0052]** The nitrogen recovery pipeline 14 is connected to the nitrogen re-liquefaction device 15 through a pipeline and the nitrogen re-liquefaction device 15 is connected to the liquid nitrogen supply pipeline 12 through a pipeline.

[**0053]** The working principle of the disclosure:

[**0054]** The core of the disclosure is to separate low temperature nitrogen after endothermic gasification and liquid nitrogen from the superconducting pipeline system as two separate accompanying pipelines. In this way, liquid nitrogen is injected into the main structure in segments for cold shielding, thereby avoiding the problems of inconsistent steel pipe shrinkage rates and design and manufacturing difficulties caused by inconsistent temperatures in the existing technology where the entire liquid hydrogen pipeline and liquid nitrogen pipeline are coaxially laid.

[**0055]** Furthermore, in order to improve the cooling effect of superconducting cables in liquid hydrogen, a support pulley block is innovatively used inside the liquid hydrogen pipeline in the disclosure to assist in erecting superconducting cables in the center of the liquid hydrogen pipeline, ensuring that the superconducting cables are in the most favorable heat dissipation position, and at the same time avoiding the problem that the irregular laying of the superconducting cable leads to excessive resistance in the liquid hydrogen transmission flow channel.

[**0056]** Furthermore, the specific system settings of the superconducting energy pipeline system starting station A, the superconducting energy pipeline system intermediate station B and the superconducting energy pipeline system terminal station C are provided in the disclosure. By effectively dividing long-distance energy transmission into a multi-segment compositional structure, the implementation difficulty of long-distance hydrogen-power superconducting hybrid energy pipeline is reduced.

## Claims

1. A direct-current superconducting liquid hydrogen energy pipeline system with liquid nitrogen cold shields, comprising: a superconducting energy pipeline system starting station A, a superconducting energy pipeline system intermediate station B and a superconducting energy pipeline system terminal station C, which are connected in sequence through a liquid hydrogen superconducting pipeline with the liquid nitrogen cold shields; wherein the liquid hydrogen superconducting pipeline with the liquid nitrogen cold shields comprises a liquid hydrogen delivery pipeline, liquid nitrogen cold shields, an external cold insulation layer, and a superconducting cable group arranged inside the liquid hydrogen delivery pipeline; the liquid nitrogen cold shields are arranged in segments outside the liquid hydrogen delivery pipeline, and the bottom and top of each of the liquid nitrogen cold shields are respectively connected to a liquid nitrogen supply pipeline and a nitrogen recovery pipeline through pipelines; and the nitrogen recovery pipeline is connected to a nitrogen re-liquefaction device through a pipeline, and the nitrogen re-liquefaction device is connected to the liquid nitrogen supply pipeline through a pipeline.

2. The direct-current superconducting liquid hydrogen energy pipeline system with the liquid nitrogen cold shields of claim 1, wherein the superconducting energy pipeline system starting station A comprises: a first electrical power input rectifying station, a first normal temperature cable group, a first low temperature cable group, a first adapter, a first liquid hydrogen storage container, a water electrolysis device, a hydrogen liquefaction device, a first superconducting cable group and a first liquid hydrogen delivery pipeline; wherein the first electrical power input rectifying station, the first normal temperature cable group, the first low temperature cable group, the first adapter and the first superconducting cable group are connected in sequence; the first electrical power input rectifying station, the water electrolysis device, the hydrogen liquefaction device, the first liquid hydrogen storage container and the first liquid hydrogen delivery pipeline are connected in sequence; and the first low temperature cable group, the first adapter and the first superconducting cable group are arranged in the first liquid hydrogen storage container.

3. The direct-current superconducting liquid hydrogen energy pipeline system with the liquid nitrogen cold shields of claim 1, wherein the superconducting energy pipeline system intermediate station B comprises: a second liquid hydrogen storage container, a second adapter, a second low temperature cable group, a second normal temperature cable group, a second electrical power input rectifying station, a third normal temperature cable group, a third low temperature cable group, a third adapter, a third liquid hydrogen storage container, a second superconducting cable group and a second liquid hydrogen delivery pipeline; wherein the second adapter, the second low temperature cable group, the second normal temperature cable group, the second electrical power input rectifying station, the third normal temperature cable group, the third low temperature cable group, the third adapter and the second superconducting cable group are connected in sequence; the second adapter and the second low temperature cable group are arranged in the second liquid hydrogen storage container; and the third low temperature cable group, the third adapter and the second superconducting cable group are arranged in the third liquid hydrogen storage container.

4. The direct-current superconducting liquid hydrogen energy pipeline system with the liquid nitrogen cold shields of claim 3, wherein a vapor-phase outlet of the second liquid hydrogen storage container is connected to a hydrogen re-liquefaction device through a pipeline, and the hydrogen re-liquefaction device is connected to the third liquid hydrogen storage container through a pipeline.

5. The direct-current superconducting liquid hydrogen energy pipeline system with the liquid nitrogen cold shields of claim 3, wherein a liquid-phase of the second liquid hydrogen storage container is connected to a liquid hydrogen pump through a pipeline, and the liquid hydrogen pump is connected to the third liquid hydrogen storage container through a pipeline.

6. The direct-current superconducting liquid hydrogen energy pipeline system with the liquid nitrogen cold shields of claim 1, wherein the superconducting energy pipeline system terminal station C comprises: a second superconducting cable group, a second liquid hydrogen delivery pipeline, a fourth liquid hydrogen storage container, a fourth adapter, a fourth low temperature cable group, a fourth normal temperature cable group, an output power inverter station, a liquid hydrogen pressurized loading facility, a hydrogen heating and pressuring device, and a hydrogen power generation device; wherein the second superconducting cable group, the fourth adapter, the fourth low temperature cable group, the fourth normal temperature cable group and the output power inverter station are connected in sequence; and the second superconducting cable group, the fourth adapter and the fourth low temperature cable group are arranged in the fourth liquid hydrogen storage container.

7. The direct-current superconducting liquid hydrogen energy pipeline system with the liquid nitrogen cold shields of claim 6, wherein a vapor-phase of the fourth liquid hydrogen storage container is connected to the hydrogen heating and pressuring device through a pipeline, and the hydrogen heating and pressuring device is connected to the hydrogen power generation device and the output power inverter station in sequence through pipelines.

8. The direct-current superconducting liquid hydrogen energy pipeline system with the liquid nitrogen cold shields of claim 6, wherein a liquid-phase of the fourth liquid hydrogen storage container is connected to the liquid hydrogen pressurized loading facility through a pipeline.

9. The direct-current superconducting liquid hydrogen energy pipeline system with the liquid nitrogen cold shields of claim 1, wherein a triangular support pulley block is arranged inside the liquid hydrogen delivery pipeline, superconducting cables are installed on the support pulley block, and an internal heat insulation layer is arranged between the liquid hydrogen delivery pipeline and the liquid nitrogen cold shield.

10. The direct-current superconducting liquid hydrogen energy pipeline system with the liquid nitrogen cold shields of claim 1, wherein the superconducting energy pipeline system intermediate station B is composed of intermediate stations B₁, B₂, ..., Bₙ with a same structure connected in series in sequence.
